# EUROPEAN PATENT APPLICATION

(11) **EP 4 840 891 A1**
(43) Date of publication of application: **18.11.2026**
(21) Application number: 25738931.2
(22) Date of filing: 10.01.2025
(51) Int. Cl.: C08F 290/14, C08F 283/12, C08L 51/08, C08L 55/00

(54) **VINYL CHLORIDE-SILICONE GRAFT COPOLYMER AND METHOD FOR PRODUCING SAME**

(30) Priority: 10.01.2024 JP 2024001794
(71) Applicant: Nissin Chemical Industry Co., Ltd., Fukui 915-0802 (JP)
(72) Inventor: YAMAZAKI, Koji, Echizen-shi, Fukui 915-0802 (JP); OKUDA, Harukazu, Echizen-shi, Fukui 915-0802 (JP); MITTA, Yasuhiro, Echizen-shi, Fukui 915-0802 (JP); MAKI, Yoshinori, Echizen-shi, Fukui 915-0802 (JP); UCHIDA, Koki, Echizen-shi, Fukui 915-0802 (JP); SUSUKI, Yudai, Echizen-shi, Fukui 915-0802 (JP)
(74) Representative: Angerhausen, Christoph
(86) International application number: PCT/JP2025/000682
(87) International publication number: WO 2025/150564

(57) **Abstract**

Provided is a vinyl chloride-silicone copolymer having slidability, water repellency, alcohol resistance, substrate adhesion, and transparency. A vinyl chloride-silicone graft copolymer is a copolymer of (A) an organopolysiloxane represented by the following formula (1) and (B) vinyl chloride, in which a mass ratio (A):(B) is 5:95 to 95:5: 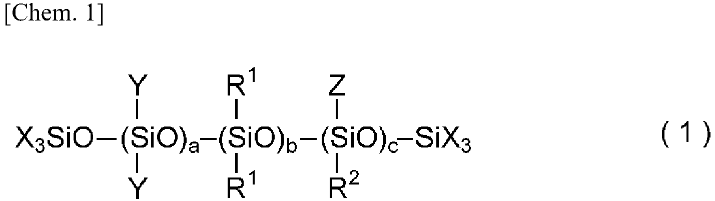 wherein, in the formula (1), each R¹ is a monovalent hydrocarbon group having 1 to 20 carbon atoms, R² is a radically reactive functional group, each X is a C₁-C₂₀ monovalent hydrocarbon group, an C₁-C₂₀ alkoxy group, or a hydroxyl group, each Y is a group represented by X or -[O-Si(X)₂]_{d}-X, Z is an C1-C4 alkyl group, a C₁-C₄ alkoxy group, or a hydroxyl group, a is 0 to 10,000, b is 100 to 10,000, c is 0.0001 to 100, and d is 1 to 1,000.

## Description

### Technical Field

The present invention relates to a graft copolymer of an organopolysiloxane and vinyl chloride and a method for producing the same, in particular, to a vinyl chloride-silicone graft copolymer that exhibits slidability, water repellency, alcohol resistance, substrate adhesion, and transparency and a method for producing the same.

### Background Art

Heretofore, silicone resins are known as the resins that can impart slidability to a substrate. However, when silicone resins are used alone, defects such as poor adhesion to the substrate have occurred.

To address this, a method in which another monomer, such as an acrylic resin, a urethane resin, or a vinyl acetate resin, is copolymerized with a silicone resin has been adopted. A copolymer such as acrylic silicone or urethane silicone can provide advantages of the silicone resin, such as weather resistance, heat resistance, cold resistance, water repellency, gas permeability, and slidability in addition to the properties of the acrylic resin or urethane resin.

For example, Patent document 1 (JP-A-2020-90563) discloses a silicone acrylic graft-copolymerized resin that has slidability, and a method for producing the same. Furthermore, Patent document 2 (JP-A-2022-131528) discloses a vinyl acetate-silicone copolymer resin that has slidability, substrate adhesion, and organic solvent solubility, and a method for producing the same.

Meanwhile, it is also known that vinyl chloride resins are also copolymerized with other monomers and used. An example thereof is a vinyl chloride-vinyl acetate copolymer resin obtained by copolymerizing vinyl chloride and vinyl acetate. Patent document 3 (JP-A-2001-114839) and others disclose a vinyl chloride-vinyl acetate copolymer resin and a method for producing the same, and it is known that when the resin is used for an ink material or a substrate such as a receptive layer, chromogenic properties and adhesion are enhanced.

Copolymerizing a silicone resin or a vinyl chloride resin with other monomers through reaction is well-known; however, for a combination of vinyl chloride and an organopolysiloxane (silicone resin), barely any attempts have been made to copolymerize these two since these are incompatible with each other. Moreover, it has not been believed that copolymerizing silicone with vinyl chloride would create a resin that can take advantage of properties of both.

Patent document 4 (JP-A-S59-166520) discloses that a resin obtained by graft-polymerizing silicone to a vinyl chloride resin has good oxygen permeability, and although this resin has been considered for applications in the fresh food package field and as medical blood bags, the resin has not been sufficiently practical to be used as a roll-kneaded product to be worked into sheets for such applications, and has had room for improvement.

In addition, Patent document 5 (JP-A-H07-102146) discloses that a block-copolymerized resin prepared from vinyl chloride and a siloxane block may be used to improve releasability during calender roll processing. Patent document 6 (JP-A-H09-255705) discloses polymerization of vinyl chloride in the presence of a copolymer resin of siloxane and acrylic. These involve the use as an additive during the vinyl chloride resin production, and hardly any studies have been made on vinyl chloride-silicone copolymer resins.

Furthermore, while a method for obtaining a coating agent by mixing a silicone resin emulsion and a vinyl chloride resin emulsion is also conceivable, the silicone component would bleed out from the mixture, and the desired properties would not be obtained, leaving room for improvement.

### Prior Art Documents

### Patent documents

Patent document 1: JP-A-2020-90563
Patent document 2: JP-A-2022-131528
Patent document 3: JP-A-2001-114839
Patent document 4: JP-A-S59-166520
Patent document 5: JP-A-H07-102146
Patent document 6: JP-A-H09-255705

### Summary of Invention

### Technical Problem

Thus, it is an object of the present invention to provide a vinyl chloride-silicone graft copolymer that exhibits slidability, water repellency, alcohol resistance, substrate adhesion, and transparency.

### Solution to Problem

The inventors of the present invention have conducted extensive studies to achieve the above-mentioned object and have arrived at the present invention by finding that a vinyl chloride-silicone graft copolymer obtained by graft-copolymerizing (A) an organopolysiloxane as set forth below and (B) vinyl chloride exhibits slidability, water repellency, alcohol resistance, substrate adhesion, and transparency.

In other words, the present invention provides a vinyl chloride-silicone graft copolymer, a method for producing the same, and a composition and an emulsion of the graft copolymer, which are as defined below.

<1> A vinyl chloride-silicone graft copolymer that is a graft copolymer of (A) an organopolysiloxane represented by the following formula (1) and (B) vinyl chloride, wherein a mass ratio of the organopolysiloxane (A) to the vinyl chloride (B) is (A):(B) = 5:95 to 95:5: 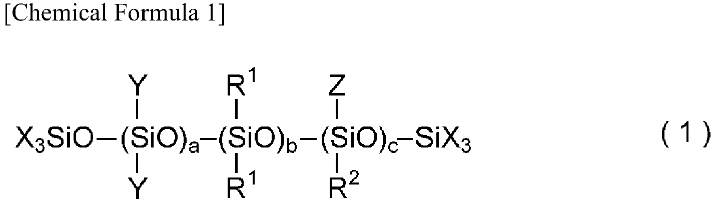 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.
<2> A method for producing a vinyl chloride-silicone graft copolymer, the method comprising a step of polymerizing (A) an organopolysiloxane represented by the following formula (1) and (B) vinyl chloride at a mass ratio (A):(B) of 5:95 to 95:5: 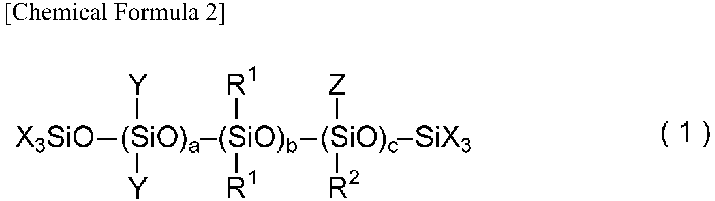 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-S1(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.
<3> A composition comprising 10 to 60% by mass of the vinyl chloride-silicone graft copolymer according to <1> in solid content relative to a total mass of the composition.
<4> An emulsion of the vinyl chloride-silicone graft copolymer according to <1>.

### Advantageous Effects of Invention

The vinyl chloride-silicone graft copolymer of the present invention exhibits slidability, water repellency, alcohol resistance, substrate adhesion, and transparency. Thus, a composition containing the vinyl chloride-silicone graft copolymer according to the present invention is suitable for use in coating agents for various substrates, adhesives, exterior-interior coating solutions for structures and building materials, cosmetics, etc.

### Description of Embodiments

### Vinyl chloride-silicone graft copolymer

The present invention provides a vinyl chloride-silicone graft copolymer obtained by graft-copolymerizing (A) an organopolysiloxane and (B) vinyl chloride.

The organopolysiloxane (A) of the present invention is represented by the following formula (1): 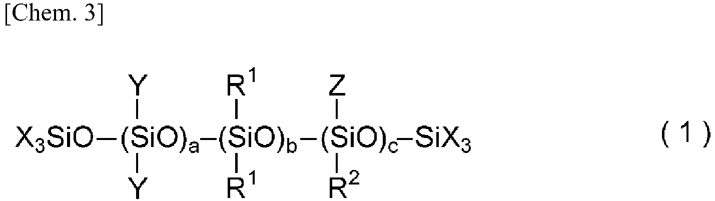 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000).

Here, each R¹ is the same or a different substituted or unsubstituted monovalent hydrocarbon group having 1 to 20 carbon atoms, and specific examples thereof include an alkyl group such as a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, or an octadecyl group; a cycloalkyl group such as a cyclopentyl group, a cyclohexyl group, or a cycloheptyl group; an alkenyl group such as a vinyl group or an allyl group; an aryl group such as a phenyl group, a tolyl group, or a naphthyl group; an alkenylaryl group such as a vinylphenyl group; an aralkyl group such as a benzyl group, a phenylethyl group, or a phenylpropyl group; an alkenylaralkyl group such as a vinylbenzyl group or a vinylphenylpropyl group; or any of the foregoing groups having some or all of the hydrogen atoms substituted with a halogen atom such as fluorine, bromine, or chlorine, an acryloxy group, a methacryloxy group, a carboxyl group, an alkoxy group, an alkenyloxy group, an amino group, or an alkyl-, alkoxy- or (meth)acryloxy-substituted amino group. Each R¹ is preferably a methyl group.

R² is a radically reactive functional group, and is, for example, an alkyl group, having 1 to 8 carbon atoms, substituted with a mercapto group or an ethylene double bond-containing group, a vinyl group, or a styryl group. Specific examples of the alkyl group, having 1 to 8 carbon atoms, substituted with a mercapto group or an ethylene double bond-containing group include alkyl groups, having 1 to 8 carbon atoms, substituted with a mercapto group, a vinyl group, a styryl group, an acryloxy group, or a methacryloxy group. Examples of the radically reactive functional group represented by R² include a vinyl group, a styryl group, an octenyl group, a methacryloxyoctyl group, a mercaptopropyl group, an acryloxypropyl group, a methacryloxypropyl group, and a methacryloxyoctyl vinyl group. R² may be one group. R² may be a combination of two or more groups.

Each X is the same or a different substituted or unsubstituted monovalent hydrocarbon group having 1 to 20 carbon atoms or an alkoxy group having 1 to 20 carbon atoms, or a hydroxyl group, examples of the substituted or unsubstituted monovalent hydrocarbon group having 1 to 20 carbon atoms include those same as the examples for R¹, and specific examples of the alkoxy group having 1 to 20 carbon atoms include a methoxy group, an ethoxy group, a propoxy group, a butoxy group, a hexyloxy group, a heptyloxy group, an octyloxy group, a decyloxy group, and a tetradecyloxy group. Among these, a hydroxyl group, a methyl group, a butyl group, and a phenyl group are preferable.

Each Y is the same or a different group represented by X or -[O-Si(X)₂]_{d}-X. Examples of X are the same as those described above.

Z is an alkyl group having 1 to 4 carbon atoms, an alkoxy group having 1 to 4 carbon atoms, or a hydroxyl group and is preferably a hydroxyl group or a methyl group.

a is a number of 0 to 10,000, preferably 0 to 1,000, and more preferably 0 to 200. The lower limit may be set to 0.5 to constitute the unit a. When a is larger than 10,000, the strength of the obtained coating film may be insufficient when a composition containing the component (A) is used to form a coating film.

b is a number of 100 to 10,000, preferably a number of 1,000 to 10,000, and more preferably a number of 1,000 to 5,000. When b is less than 100, the coating may have poor flexibility, and when b is more than 10,000, the tear strength thereof may decrease.

c is a number of 0.0001 to 100, and when c exceeds 100, the sliding effect is not always exhibited.

Here, c/(a + b + c) × 100 is preferably 0.0001 to 10, more preferably 0.001 to 10, yet more preferably 0.001 or more and less than 4, and particularly preferably 0.001 to 2.

d is a number of 1 to 1,000 and preferably 1 to 200.

The organopolysiloxane represented by the formula (1) above is preferably used in an emulsion form, and may be a commercially available product or may be synthesized. When the organopolysiloxane is to be synthesized, a known emulsion polymerization method may be adopted; for example, the organopolysiloxane can be easily synthesized by emulsifying and dispersing, in water, a cyclic organosiloxane or α,ω-dihydroxysiloxane oligomer, α,ω-dialkoxysiloxane oligomer, alkoxysilane, or the like, with a silane coupling agent represented by the following formula (2) by using an anionic surfactant, and then carrying out polymerization reaction by adding a polymerization catalyst such as an acid as necessary. The cyclic organosiloxane may have a fluorine atom, a (meth)acryloxy group, a carboxyl group, a hydroxyl group, or an amino group.
[Chem. 4]

R³_{(4-e-f})R⁴_{f}Si(OR⁵)ₑ (2)

In the formula (2), R³ is a radically reactive functional group, in particular, an acryloxy group, a methacryloxy group, an alkyl group having 1 to 8 carbon atoms substituted with a vinyl group or a mercapto group, a styryl group, or a vinyl group, R⁴ is an alkyl group having 1 to 4 carbon atoms or a hydroxyl group, R⁵ is an alkyl group having 1 to 4 carbon atoms, e is 2 or 3, f is 0 or 1, and e + f is 2 or 3.)

Examples of the cyclic organosiloxane include hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl)trimethylcyclotrisiloxane, 1,3,5,7-tetra(3-methacryloxypropyl)tetramethylcyclotetrasiloxane, 1,3,5,7-tetra(3-acryloxypropyl)tetramethylcyclotetrasiloxane, 1,3,5,7-tetra(3-carboxypropyl)tetramethylcyclotetrasiloxane, 1,3,5,7-tetra(3-vinyloxypropyl)tetramethylcyclotetrasiloxane, 1,3,5,7-tetra(p-vinylphenyl)tetramethylcyclotetrasiloxane, 1,3,5,7-tetra[3-(p-vinylphenyl)propyl]tetramethylcyclotetrasiloxane, 1,3,5,7-tetra(N-acryloyl-N-methyl-3-aminopropyl)tetramethylcyclotetrasiloxane, and 1,3,5,7-tetra(N,N-bis(lauroyl)-3-aminopropyl)tetramethylcyclotetrasiloxane. Preferably, octamethylcyclotetrasiloxane and decamethylcyclopentasiloxane are used.

Specific examples of the silane coupling agent include vinylsilanes such as vinyltrimethoxysilane, vinyltriethoxysilane, vinyltripropoxysilane, vinyltriisopropoxysilane, vinylmethyldimethoxysilane, and vinylmethyldiethoxysilane; acrylic silanes such as γ-(meth)acryloxypropyltrimethoxysilane, γ-(meth)acryloxypropyltriethoxysilane, γ-(meth)acryloxypropyltripropoxysilane, γ-(meth)acryloxypropyltriisopropoxysilane, γ-(meth)acryloxypropyltributoxysilane, γ-(meth)acryloxypropylmethyldimethoxysilane, - γ-(meth)acryloxypropylmethyldiethoxysilane, γ-(meth)acryloxypropylmethyldipropoxysilane, γ-(meth)acryloxypropylmethyldiisopropoxysilane, and γ-(meth)acryloxypropylmethyldibutoxysilane; mercaptosilanes such as γ-mercaptopropylmethyldimethoxysilane and γ-mercaptopropyltrimethoxysilane; and styrylsilanes such as styryltrimethoxysilane. An oligomer obtained by condensation polymerization of any of these monomers is sometimes more preferable since generation of alcohols is suppressed. Here, (meth)acryloxy refers to acryloxy or methacryloxy.

These silane coupling agents are preferably used in an amount of 0.01 to 20 parts by mass and more preferably 0.01 to 5 parts by mass per 100 parts by mass of the cyclic organosiloxane or α,ω-dihydroxysiloxane oligomer, α,ω-dialkoxysiloxane oligomer, or alkoxysilane.

By copolymerizing a silane coupling agent with a cyclic organosiloxane or α,ω-dihydroxysiloxane oligomer, α,ω-dialkoxysiloxane oligomer, or alkoxysilane, an organopolysiloxane that has a unit (unit represented by [Si(R²)(Z)O]) having a repeating number of c in the formula (1) above is obtained, and (B) vinyl chloride can be graft-polymerized thereto.

A known polymerization catalyst may be used as the polymerization catalyst. In particular, a strong acid is preferred, and examples thereof include hydrochloric acid, sulfuric acid, dodecylbenzenesulfonic acid, citric acid, lactic acid, and ascorbic acid. Dodecylbenzenesulfonic acid, which has a surfactant function, is preferable.

The amount of the polymerization catalyst used is preferably 0.01 to 10 parts by mass and more preferably 0.2 to 2 parts by mass per 100 parts by mass of the cyclic organosiloxane or α,ω-dihydroxysiloxane oligomer, α,ω-dialkoxysiloxane oligomer, or alkoxysilane.

In addition, as the anionic surfactant, sodium lauryl sulfate, sodium laureth sulfate, N-acylamino acid salts, N-acyl taurine salts, aliphatic soaps, alkyl phosphates, sodium lauroyl methyl taurate, and sodium myristoyl methyl taurate, etc., are preferable. More preferable are N-acyl amino acid salts, N-acyl taurine salts, aliphatic soaps, alkyl phosphates, sodium lauroyl methyl taurate, and sodium myristoyl methyl taurate, and particularly preferable are sodium lauroyl methyl taurate, sodium myristoyl methyl taurate, and sodium lauryl sulfate.

The amount of the anionic surfactant used is preferably 0.1 to 20 parts by mass and more preferably 0.5 to 10 parts by mass per 100 parts by mass of the cyclic organosiloxane or α,ω-dihydroxysiloxane oligomer, α,ω-dialkoxysiloxane oligomer, or alkoxysilane.

The polymerization temperature is preferably 50 to 75°C, and the polymerization time is preferably 10 hours or more and more preferably 15 hours or more. Furthermore, aging at 5 to 30°C for 10 hours or more is preferably performed after polymerization.

After completion of the polymerization reaction, the product may be neutralized to a pH of 2.5 to 14, preferably 4 to 11, using a neutralizing agent (of, for example, a 10% aqueous sodium carbonate solution).

The weight-average molecular weight (Mw) obtained by viscosity measurement of the organopolysiloxane (A) is preferably 10,000 to 1,000,000 and more preferably 100,000 to 500,000 from the viewpoint of exhibiting slidability.

Here, the weight-average molecular weight (Mw) obtained by viscosity measurement of the organopolysiloxane is calculated from the specific viscosity ηsp (25°C) of a toluene solution of organopolysiloxane having a concentration of 1 g/100 ml. $ηsp = \left(η/η0\right) - 1$ (η0: viscosity of toluene, η: viscosity of solution) $ηsp = \left[η\right] + 0.3 {\left[η\right]}^{2}$ $\left[η\right] = 0.215 \times {10}^{- 4} {M}^{0.65}$

Specifically, 20 g of an emulsion of organopolysiloxane is mixed with 20 g of IPA (isopropyl alcohol) to break the emulsion, and then IPA is discarded and the residual rubbery organopolysiloxane is dried overnight at 60°C. The resulting product is prepared into a toluene solution with an organopolysiloxane concentration of 1 g/100 ml, and the toluene solution is measured with a Ubbelohde viscometer at 25°C. The molecular weight can be determined by substituting the viscosity into the aforementioned formula (reference literature: Nakamuta, Journal of the Chemical Society of Japan, 77 858 [1956] and Doklady Akad. Nauk. U.S.S.R. 8965 [1953]).

### Production method

The vinyl chloride-silicone graft copolymer according to the present invention can be obtained by graft polymerization of the organopolysiloxane (A) and the vinyl chloride (B).

The vinyl chloride-silicone graft copolymer according to the present invention may be produced by a method involving a step of performing graft polymerization of the organopolysiloxane of the formula (1) (component (A)) and vinyl chloride (component (B)) at a mass ratio (mass ratio of the organopolysiloxane of the formula (1) to the vinyl chloride units) of 5:95 to 95:5, preferably 20:80 to 85:15. When the proportion of the organopolysiloxane component of the formula (1) is less than 5 as described above, the slidability is not exhibited in some cases.

Examples of the radical initiator used in producing the vinyl chloride-silicone graft copolymer according to the present invention include persulfates such as potassium persulfate and ammonium persulfate, aqueous hydrogen persulfate, t-butyl hydroperoxide, and hydrogen peroxide. If necessary, redox compounds in combined use with reducing agents such as sodium hydrogen sulfite, Rongalit, L-ascorbic acid, tartaric acid, sugars, and amines may also be employed.

Furthermore, the amount of the radical initiator used is preferably 0.1 to 5% by mass and more preferably 0.5 to 3% by mass of the vinyl chloride (B).

The temperature for polymerizing the component (B) with the component (A) is preferably 25 to 85°C and more preferably 55 to 85°C. Furthermore, the polymerization time is preferably 2 to 20 hours and more preferably 3 to 10 hours.

In order to adjust the molecular weight of the polymer and the polymerization ratio, a chain transfer agent may be added. Examples thereof include halogenated hydrocarbons such as chloroform and carbon tetrachloride; and mercaptans such as n-dodecyl mercaptan, tert-dodecyl mercaptan, and n-octyl mercaptan.

The amount of the chain transfer agent used is preferably 0.1 to 1 part by mass and more preferably 0.3 to 0.8 parts by mass per 100 parts by mass of the monomer (vinyl chloride).

The resultant vinyl chloride-silicone graft copolymer is a polymer in which the vinyl chloride of the component (B) is randomly bonded to the organopolysiloxane of the component (A) and in which multiple types of structures are mixed; thus, this product cannot be directly specified by the structure or properties thereof.

A preferred method for producing a vinyl chloride-silicone graft copolymer according to the present invention includes a step of performing emulsion polymerization of the organopolysiloxane of the formula (1) (Component (A)) with vinyl chloride (Component (B)) at a mass ratio (mass ratio of the organopolysiloxane of the formula (1) to the vinyl chloride units) of 5:95 to 95:5, preferably 20:80 to 85:15.

For the emulsion polymerization, the organopolysiloxane of the component (A) is used in the emulsion form, and the surfactant contained in the organopolysiloxane emulsion is sufficient to carry out graft polymerization; however, for improved stability, sodium lauryl sulfate, sodium laureth sulfate, N-acyl amino acid salts, N-acyl taurine salts, aliphatic soaps, alkyl phosphates, etc., may be added as an anionic surfactant. In addition, a nonionic emulsifier such as polyoxyethylene lauryl ether or polyoxyethylene tridecyl ether may be added. When the surfactants are added, the amount thereof used is preferably 0.1 to 5% by mass of the vinyl chloride (B).

The resultant vinyl chloride-silicone graft copolymer obtained by emulsion polymerization in this way may also be obtained in the emulsion form, that is, as an emulsion of the vinyl chloride-silicone graft copolymer.

The vinyl chloride-silicone graft copolymer preferably has an emulsion solid content of 25 to 40% by mass. The viscosity (25°C) of this emulsion is preferably 1 to 500 mPa·s and more preferably 1 to 200 mPa·s. The viscosity can be measured with a rotational viscometer. The emulsion preferably has an average particle size of 0.1 µm (100 nm) to 0.5 µm (500 nm). The average particle size as used herein refers to a value measured with a dynamic light scattering particle size distribution analyzer.

The vinyl chloride-silicone graft copolymer according to the present invention can be prepared into a powder by forming particles from the emulsion by the method described below. Examples of the method include cryogenic crushing, spray drying, and airflow drying, and spray drying is preferable from the productivity standpoint. The average particle size of the obtained powder particles is preferably small, preferably 1 to 50 µm, and more preferably 1 to 30 µm. The particle size of the emulsion and the powder can be measured as the cumulative mass average value D50 with a laser diffraction-type particle size meter.

When the vinyl chloride-silicone graft copolymer (copolymer resin) according to the present invention is used in combination with other resins, pigments, fillers, matting agents, antioxidants, UV absorbers, antifreeze agents, pH adjusters, preservatives, defoamers, antibacterial agents, antifungal agents, light stabilizers, antistatic agents, plasticizers, flame retardants, thickeners, surfactants, and/or organic solvents (film-forming aids, etc.) or the like, the resulting composition containing the vinyl chloride-silicone graft copolymer can be used as coating agents for various substrates such as synthetic resins, metals, glass, ceramics, plaster, paper, wood, leather, lightweight concrete, lightweight aerated concrete, mortar, calcium silicate boards, slate, gypsum boards, etc.; adhesives, binders of exterior-interior coating solutions for structures and building materials, etc.; paper processing agents; fiber processing agents; and cosmetics.

A composition that contains the vinyl chloride-silicone graft copolymer according to the present invention preferably contains a vinyl chloride-silicone graft copolymer in an amount of 10 to 60% by mass, more preferably 20 to 50% by mass and particularly preferably 30 to 50% by mass in solid content relative to the total mass of the composition.

It should be noted that when the composition containing the vinyl chloride-silicone graft copolymer is to be mixed with an organic solvent, examples of the organic solvent include aromatic hydrocarbons such as styrene, toluene, xylene, and ethylbenzene; aliphatic hydrocarbons such as hexane and cyclohexane; ketones such as acetone, methyl ethyl ketone, methyl isobutyl ketone, and cyclohexanone; ethers such as tetrahydrofuran, dioxane, ethylene glycol dimethyl ether, diethylene glycol dimethyl ether, and anisole; esters such as ethyl acetate, butyl acetate, propylene glycol monomethyl ether acetate, and 3-methoxybutyl acetate; cellosolves such as methyl cellosolve, ethyl cellosolve, and butyl cellosolve; alcohols such as methanol, ethanol, isopropanol, and n-butanol; nitriles such as acetonitrile, propionitrile, butyronitrile, and benzonitrile; amide compounds such as N,N-dimethylformamide, N,N-dimethylacetamide, and N-methyl-2-pyrrolidone; chloroform; and dimethyl sulfoxide. These organic solvents may be used alone or in any combination by mixing.

The composition containing the vinyl chloride-silicone graft copolymer according to the present invention may be used as a coating agent. In this case, such coating agent can be obtained by mixing and dissolving the vinyl chloride-silicone graft copolymer with other components through a known mixing preparation method such as a propeller agitator, a homogenizer, a ball mill, or a bead mill. By providing this coating agent to one surface or both surfaces of a substrate such as a glass or resin substrate by application or dipping, followed by drying, slidability and substrate adhesion can be imparted.

### Examples

Working examples and comparative examples will now be presented to specifically describe the present invention; however, the present invention is not limited to the following working examples. Furthermore, the molecular weights described below are weight-average molecular weights (Mw), determined by viscosity measurement, calculated from the specific viscosity of a toluene solution of organopolysiloxane having a concentration of 1 g/100 ml. In the examples below, parts and % respectively indicate parts by mass and % by mass.

### [Working Example 1]

Into a 4 L polyethylene beaker, a solution prepared by dissolving 1200 g of octamethylcyclotetrasiloxane, 4.8 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 44%, and the organopolysiloxane in the emulsion had a non-flowing soft gel form. The emulsion (silicone composition) had a structure represented by the following formula (A) with a molecular weight of about 250,000 as estimated from the viscosity of the toluene solution. In the formula (A), R² is a γ-methacryloxypropyl group. The structure of the organopolysiloxane obtained by the aforementioned polymerization reaction was confirmed by ¹H-NMR (frequency: 600 MHz, room temperature, accumulation number of 128 repeats) and ²⁹Si-NMR (frequency: 60 MHz, room temperature, accumulation number of 5000 repeats) (instrument name: JNM-ECA600, measurement solvent: CDCl₃).

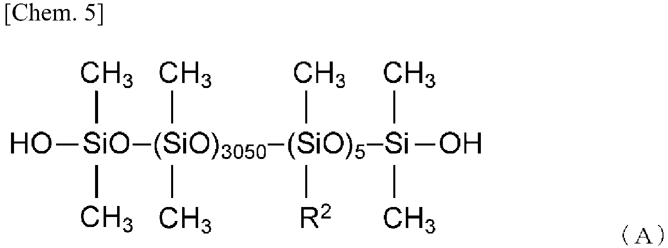

Into a polymerization vessel equipped with a stirrer, a condenser, a thermometer, and a nitrogen gas inlet port, 1207 g of the aforementioned emulsion was transferred, and 59 g of vinyl chloride and ammonium persulfate were added thereto, and reaction was carried out at 60°C for 8 hours to graft-copolymerize vinyl chloride to the silicone composition to thereby obtain an emulsion of a vinyl chloride-silicone graft copolymer having a non-volatile content of 30%. The obtained vinyl chloride-silicone graft copolymer was a vinyl chloride-silicone graft copolymer in which vinyl chloride was grafted to R² in the formula (A).

### [Working Example 2]

An emulsion of a vinyl chloride-silicone graft copolymer having a non-volatile content of 30% was obtained by the same method except that the amount of vinyl chloride in Working example 1 was changed to 132 g.

### [Working Example 3]

An emulsion of a silicone-vinyl chloride graft copolymer having a non-volatile content of 30% was obtained by the same method except that the amount of vinyl chloride in Working example 1 was changed to 226 g.

### [Working Example 4]

Into a 4 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 45%, and the organopolysiloxane in the emulsion had a non-flowing soft gel form. The emulsion (silicone composition) had a structure represented by the following formula (B) with a molecular weight of about 250,000 as estimated from the viscosity of the toluene solution. In the formula (B), R² is a γ-methacryloxypropyl group.

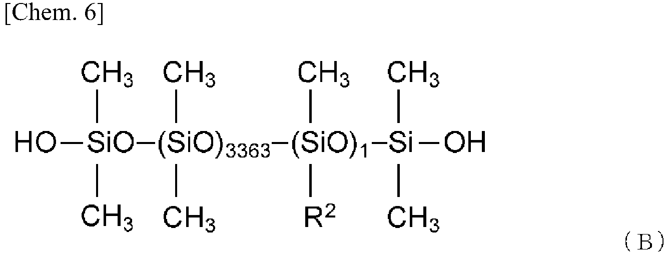

Into a polymerization vessel equipped with a stirrer, a condenser, a thermometer, and a nitrogen gas inlet port, 1198 g of the aforementioned emulsion was transferred, and 231 g of vinyl chloride and ammonium persulfate were added thereto, and reaction was carried out at 60°C for 8 hours to graft-copolymerize vinyl chloride to the silicone composition to thereby obtain an emulsion of a vinyl chloride-silicone graft copolymer having a non-volatile content of 30%. The obtained vinyl chloride-silicone graft copolymer was a vinyl chloride-silicone graft copolymer in which vinyl chloride was grafted to R² in the formula (B).

### [Working Example 5]

An emulsion of a vinyl chloride-silicone graft copolymer having a non-volatile content of 30% was obtained by the same method except that the amount of vinyl chloride in Working example 1 was changed to 528 g.

### [Working Example 6]

An emulsion of a vinyl chloride-silicone graft copolymer having a non-volatile content of 30% was obtained by the same method except that the amount of vinyl chloride in Working example 1 was changed to 1232 g.

### [Working Example 7]

An emulsion of a vinyl chloride-silicone graft copolymer having a non-volatile content of 30% was obtained by the same method except that the amount of vinyl chloride in Working example 1 was changed to 4752 g.

### [Comparative Example 1]

Into a 4 L polyethylene beaker, a solution prepared by dissolving 1200 g of octamethylcyclotetrasiloxane, 4.8 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 44%, and the organopolysiloxane in the emulsion had a non-flowing soft gel form. The emulsion (silicone composition) had a structure represented by the formula (A) above with a molecular weight of about 250,000 as estimated from the viscosity of the toluene solution.

### [Comparative Example 2]

To a polymerization vessel equipped with a stirrer, a condenser, a thermometer, and a nitrogen gas inlet port, 840 g of vinyl chloride, 16.8 g of 2-hydroxyethyl methacrylate, and potassium peroxodisulfate were added, reaction was carried out for 30 hours while adding 2530 g of vinyl chloride at 45°C, and an emulsion of a copolymer having a non-volatile content of 40% was obtained as a result.

### [Comparative Example 3]

Into a 2 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 400 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content after drying at 105°C for 3 hours was 45%, and the organopolysiloxane in the emulsion had a non-flowing soft gel form. The emulsion (silicone composition) had a structure represented by the formula (B) with a molecular weight of about 250,000 as estimated from the viscosity of the toluene solution.

To this emulsion, while 231.4 g of methyl methacrylate was added dropwise over a period of 3 to 5 hours, reaction was carried out at 27°C by using t-butyl hydroperoxide to graft-copolymerize acrylic to the silicone composition described above, as a result of which an emulsion of an acrylic-silicone graft copolymer having a non-volatile content of 44.4% was obtained.

### [Comparative Example 4]

160 g of the silicone emulsion obtained in the Comparative example 1 described above and 75 g of the vinyl chloride emulsion obtained in the Comparative example 2 described above were mixed and stirred for 1 hour, as a result of which a mixed emulsion having a non-volatile content of 42.7% was obtained.

### [Comparative Example 5]

Into a 2 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 400 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content after drying at 105°C for 3 hours was 45%, and the organopolysiloxane in the emulsion had a non-flowing soft gel form. The emulsion (silicone composition) had a structure represented by the formula (B) with a molecular weight of about 250,000 as estimated from the viscosity of the toluene solution.

To this emulsion, while 231.1 g of styrene was added dropwise over a period of 3 to 5 hours, reaction was carried out at 27°C by using t-butyl hydroperoxide to graft-copolymerize styrene to the silicone composition described above, as a result of which an emulsion of a styrene-silicone graft copolymer having a non-volatile content of 44.0% was obtained.

### [Comparative Example 6]

Into a 2 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 400 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content after drying at 105°C for 3 hours was 45%, and the organopolysiloxane in the emulsion had a non-flowing soft gel form. The emulsion (silicone composition) had a structure represented by the formula (B) with a molecular weight of about 250,000 as estimated from the viscosity of the toluene solution.

To this emulsion, while 231.1 g of acrylonitrile was added dropwise over a period of 3 to 5 hours, reaction was carried out at 27°C by using t-butyl hydroperoxide; however, gelation occurred during dropwise addition, and the desired acrylonitrile-silicone copolymer could not be obtained.

The emulsions obtained in the Working examples 1 to 7 and Comparative examples 1 to 5 described above were evaluated by the following methods. The results are indicated in Tables 1 and 2.

### <Solid content measurement method>

About 1 g of a sample was accurately weighed into an aluminum foil dish, placed in a dryer kept at about 105°C, heated for 1 hour, removed from the dryer, and placed in a desiccator to cool, and then the aluminum foil dish with the dried sample therein was weighed, and the solid content (evaporation residue) was calculated using the following formula: [Math. 1] $R = \frac{T - L}{W - L} \times 100$
R: Solid content (evaporation residue) (%)
W: Mass (g) of the aluminum foil dish with the sample therein before drying
L: Mass (g) of the aluminum foil dish
T: Mass (g) of the aluminum foil dish with the sample therein after drying
Dimension of aluminum foil dish: 65 φ × 23 h (mm)

### <Viscosity measurement method>

The liquid temperature of a sample was held at 23 ± 0.5°C, and a rotational viscometer (No. 1 rotor, 6 rpm, available from Toki Sangyo Co., Ltd., trade name: VISCOMETER TVB-10) was used for the measurement.

### <Average particle size>

The average particle size was measured by weighing 0.01 g of a sample, and measuring the average particle size (the value of the particle size corresponding to 50% of the particle size cumulative distribution) with a laser diffraction particle size distribution analyzer (available from Horiba, Ltd., trade name: LA-950V2) under the conditions of circulation flow rate 2 and stirring rate 2.

### [Measurement conditions]

Measurement temperature: 25 ± 1°C
Solvent: ion-exchanged water

### <Measurement of minimum film-forming temperature (MFT)>

The minimum film-forming temperature (MFT, °C) of the emulsion was measured by a method conforming to JIS K-6828-2. Specifically, a simplified film-forming temperature meter (available from Imoto machinery Co., LTD.) in which a heating source and a cooling source were installed with a particular distance from each other was used. To an aluminum foil, 1 µl of the emulsion was applied, and the state of the coating film after 2 hours was observed using the aforementioned instrument. The emulsion was dried with a temperature gradient, and the temperature at the border between a portion that became transparent by film formation and a portion that did not form a film was measured, and this result was assumed to be the minimum film-forming temperature (MFT, °C). Considering the drying property during the coating film formation, the MFT is preferably 100°C or less.

### <Measurement of static and kinetic coefficients of friction>

Each of the emulsions of Working Examples and Comparative Examples was applied to a PET film with a bar coater and dried at 105°C for 3 minutes so that a coating film having a thickness of about 10 µm after drying was formed.

A 200 g metal indenter was brought into contact with the coating film vertically by using HEIDON TYPE-38 (SHINTO Scientific Co., Ltd.) and moved at 3 cm/minute during which the friction force was measured; and then the coefficients of friction were calculated from the friction force. Note that the preferable ranges of the static and kinetic coefficients of friction under the aforementioned conditions are 0.2 or less for the static coefficient of friction, and 0.1 or less for the kinetic coefficient of friction.

### <Substrate adhesion>

Each of the emulsions of Working Examples and Comparative Examples was applied to a soft vinyl chloride film with a bar coater and dried at 105°C for 3 minutes so that a coating film having a thickness of about 10 µm after drying was formed.

A cellophane tape was attached to the coating film and peeled off in one motion, and the adhesion was evaluated by visual observation.
∘: Peeling from the substrate did not occur.
×: Peeling from the substrate occurred.

### <Alcohol resistance>

Each of the emulsions of Working Examples and Comparative Examples was applied to a PET film with a bar coater and dried at 105°C for 3 minutes so that a coating film having a thickness of about 10 µm after drying was formed.

Onto the coating film, a droplet of 98% ethanol was deposited, and the coating film was air-dried at room temperature overnight. The change in the coating film after air drying was evaluated through visual observation.
∘: No change in appearance occurred.
Δ: Marks were found but no blushing occurred.
×: Blushing occurred.

### <Water contact angle>

Each of the emulsions of Working Examples and Comparative Examples was applied to a PET film using a bar coater and dried at 105°C for 3 minutes so that a coating film having a thickness of about 10 µm after drying was formed.

Onto the coating film, a 2 µl droplet of pure water was deposited, and the contact angle was measured after 1 second and then after 30 seconds using a contact angle meter of type CAD available from Kyowa Interface Science. The contact angle is preferably 80° (degrees) or more in view of preventing adhesion of water-based stains by water repellency.

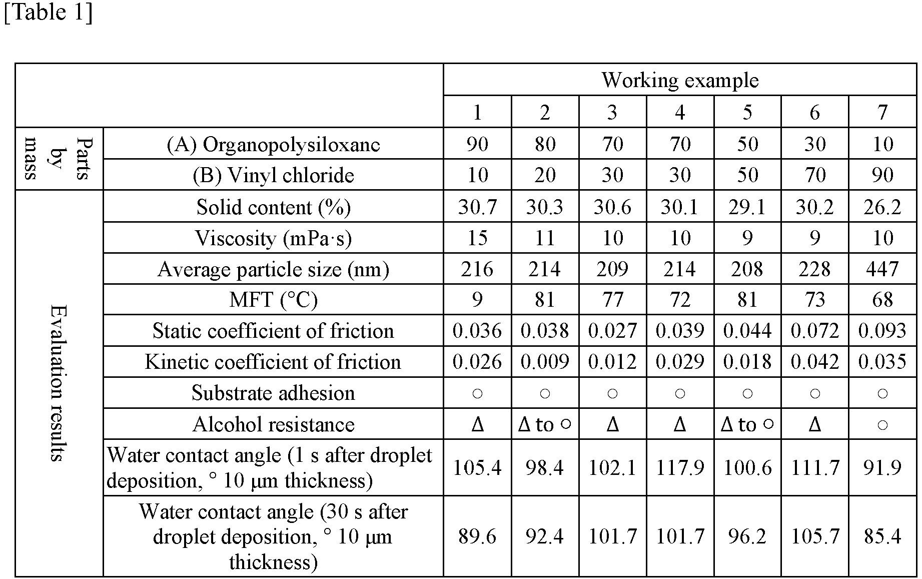

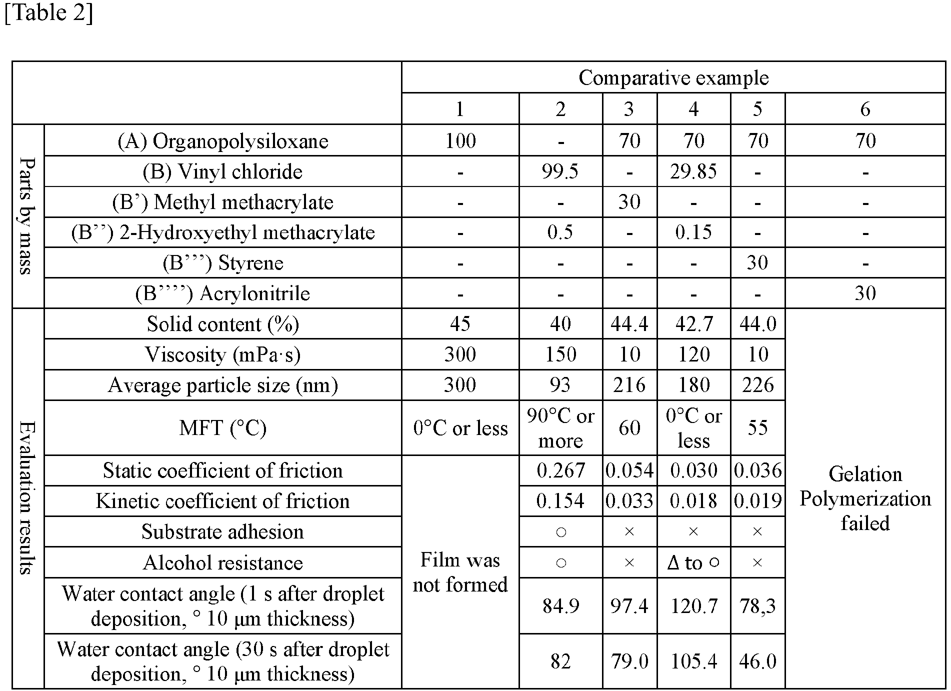

## Claims

1. A vinyl chloride-silicone graft copolymer that is a graft copolymer of (A) an organopolysiloxane represented by the following formula (1) and (B) vinyl chloride, wherein a mass ratio of the organopolysiloxane (A) to the vinyl chloride (B) is (A):(B) = 5:95 to 95:5: 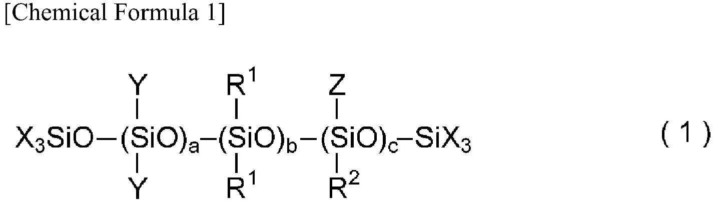 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.

2. A method for producing a vinyl chloride-silicone graft copolymer, the method comprising a step of polymerizing (A) an organopolysiloxane represented by the following formula (1) and (B) vinyl chloride at a mass ratio (A):(B) of 5:95 to 95:5: 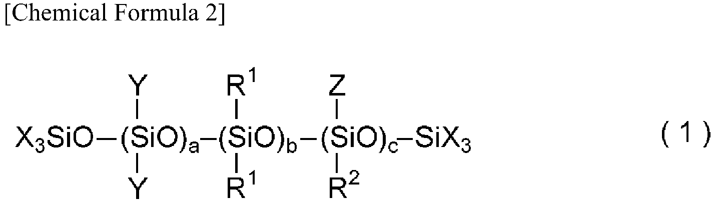 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.

3. A composition comprising 10 to 60% by mass of the vinyl chloride-silicone graft copolymer according to claim 1 in solid content relative to a total mass of the composition.

4. An emulsion of the vinyl chloride-silicone graft copolymer according to claim 1.
